# EUROPÄISCHE PATENTANMELDUNG

(11) **EP 1 193 166 A2**
(43) Veröffentlichungstag der Anmeldung: **03.04.2002**
(21) Anmeldenummer: 01116420.9
(22) Anmeldetag: 06.07.2001
(51) Int. Cl.: B62D 35/00

(54) **Luftleitvorrichtung für ein Kraftfahrzeug**

(30) Priorität: 28.09.2000 DE 10048122
(71) Anmelder: Dr.Ing. h.c.F. Porsche Aktiengesellschaft, 70435 Stuttgart (DE)
(72) Erfinder: Hill, Jason, Long Beach, CA 90803 (US); Heiler, Roland, Laguna Niguel, CA 92677 (US); Szwaj, Maxel, Birmingham, CA 48009 (US)

(57) **Zusammenfassung**

Diese Luftleitvorrichtung ist für ein Kraftfahrzeug, insbesondere einen Sportwagen, geeignet und verläuft in Fahrzeugquerrichtung benachbart einem Heckdeckel, wobei die Luftleitvorrichtung mittels einer Betätigungseinrichtung aus einer Ruhestellung in eine Betriebsstellung und vice versa beweglich ist.

Zur funktionalen und baulichen Optimierung der Luftleitvorrichtung, ist sie mittels einer Schwenkarmvorrichtung am Heckdeckel angelenkt, die mit der Betätigungseinrichtung, mit der die Luftleitvorrichtung aus der Ruhestellung in die Betriebsstellung bewegt wird, trennbar verbunden ist.

## Beschreibung

Die Erfindung betrifft eine Luftleitvorrichtung für ein Kraftfahrzeug, insbesondere einen Sportwagen, nach dem Oberbegriff des Patentanspruchs 1.

Eine bekannte Luftleitvorrichtung der eingangs genannten Gattung, DE- Porsche Service Information '96, ist im hinteren Fahrzeugbereich eines Sportwagens an einem Heckdeckel fest angeordnet. Aufgrund der Gestaltung der Luftleitvorrichtung werden die aerodynamischen Eigenschaften des Sportwagens optimiert, insbesondere aber auch der Auftrieb an der Hinterachse reduziert.

Eine weiterentwickelte Luftleitvorrichtung, DE 197 41 321 AI, umfasst einen Heckflügel, der aus einer eingefahrenen Ruhestellung in eine ausgefahrene Betriebstellung bewegbar ist und umgekehrt. Zur Betätigung des Heckflügels dient eine Antriebseinrichtung, die zwei in Fahrzeugquerrichtung mit Abstand zueinander angeordnete Teleskopaussteller aufweist. Die Teleskopaussteller greifen an der Unterseite des Heckflügels an, der benachbart einer schwenkbaren Heckhaube verläuft.

Es ist Aufgabe der Erfindung eine verstellbare Luftleitvorrichtung für ein Kraftfahrzeug im Bereich eines Heckdeckels derart auszubilden, dass sie bei guter aerodynamischer und kinematischer Funktion sich baulich leicht in angrenzende Formstrukturen eines Aufbaus integrieren lässt.

Erfindungsgemäß wird diese Aufgabe durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass die Luftleitvorrichtung räumlich günstig in den Aufbau eingegliedert ist und zur aerodynamischen Optimierung des Kraftfahrzeugs beiträgt. Darüber hinaus ermöglicht die Anlenkung der Luftleitvorrichtung am Heckdeckel gute Voraussetzungen um letztere einerseits in die verschiedenen Stellungen zu bewegen und andererseits an die Betätigungseinrichtung anzugliedern. Dabei können der Heckdeckel und die Luftleitvorrichtung zu einem vorgefertigten Modul zusammengefasst sein. Das Federelement der Schwenkarmvorrichtung stellt sicher, dass die Luftleitvorrichtung mit gezielter Spannung mit der Betätigungseinrichtung bzw. dem Betätigungsgestänge zusammenarbeitet. Die mit dem Betätigungsgestänge verbundene Stelleinrichtung kann hydraulischer, pneumatischer oder elektrischer Gattung sein. Schließlich ist zwischen dem Heckdeckel und den Schwenkarmen der Schwenkarmvorrichtung eine Sperreinrichtung vorgesehen, die die Luftleitvorrichtung in der Ruhestellung hält, wodurch die Luftleitvorrichtung im Fahrbetrieb in der Ruhestellung fixiert ist.

In der Zeichnung wird ein Ausführungsbeispiel der Erfindung gezeigt, das nachstehend näher beschrieben ist.

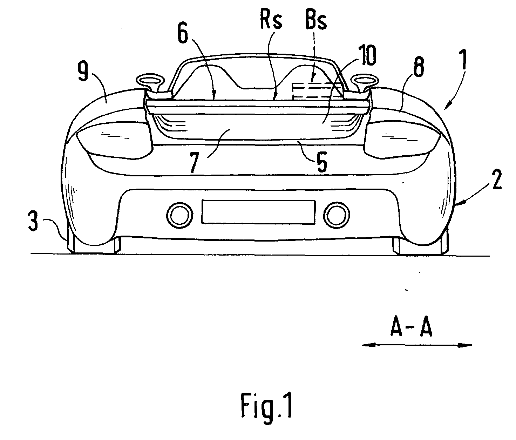

Es zeigen
- Fig. 1: eine Ansicht von hinten auf ein Kraftfahrzeug mit der erfindungsgemäßen Luftleitvorrichtung,

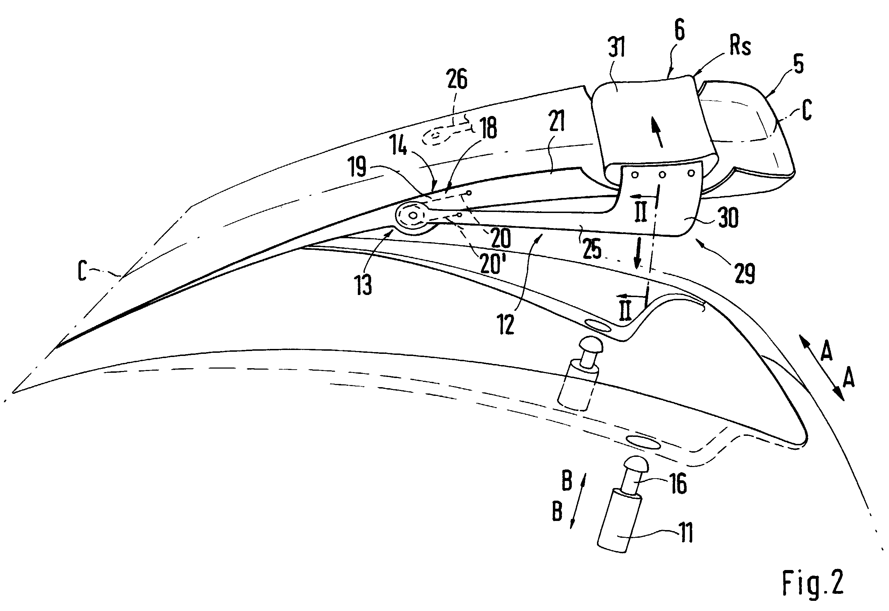

- Fig. 2: eine schematische Schrägansicht von oben und einer Längsseite des Kraftfahrzeugs aus auf einen Heckdeckel mit der Luftleitvorrichtung,

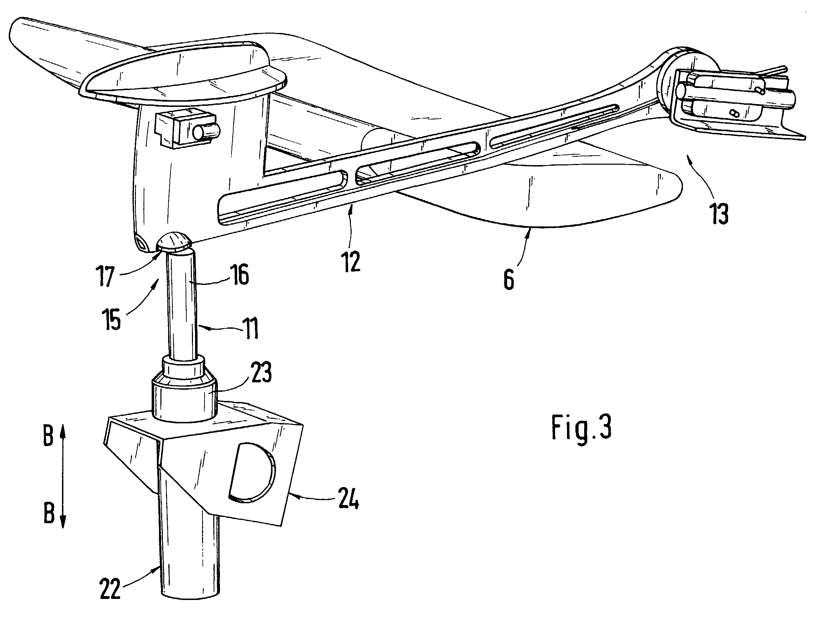

- Fig. 3: eine Schrägansicht von hinten rechts auf Einzelheiten der Luftleitvorrichtung,

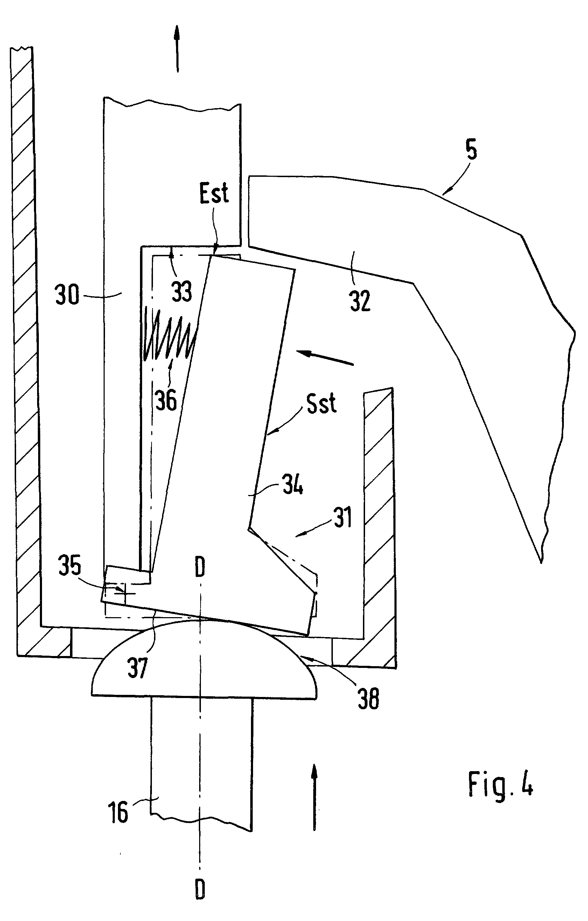

- Fig. 4: einen Schnitt nach der Linie IV-IV der Fig. 2 in größerem Maßstab.

Ein als Sportwagen 1 ausgeführtes Kraftfahrzeug umfasst einen Aufbau 2, der von Rädern 3 getragen wird und in einem hecknahen Endbereich 4 einen Heckdeckel 5 und eine Luftleitvorrichtung 6 aufweist. Die Luftleitvorrichtung 6 dient zur aerodynamischen Optimierung des Sportwagens 1, verläuft oberhalb einer Außenwand 7 des Heckdeckels 5 in Fahrzeugquerrichtung A-A und wird von Seitenteilen 8,9 begrenzt, dergestalt, dass die Luftleitvorrichtung 6 zumindest bereichsweise oberflächenbündig zu den Seitenteilen 8,9 ausgerichtet sind. Darüber hinaus bilden die Außenwand 7 des Heckdeckels 5 und die Luftleitvorrichtung 6 einen Durchströmkanal 10.

Um die aerodynamische Wirkung der Luftleitvorrichtung 6 gezielt einzusetzen, ist sie so ausgebildet, dass sie aus einer Ruhestellung Rs in eine Betriebsstellung Bs beweglich ist und vice versa. Hierzu ist eine Betätigungseinrichtung 11 vorgesehen, die mit einer Schwenkarmvorrichtung 12 trennbar zusammenarbeitet. Über die Schwenkarmvorrichtung 12 ist die Luftleitvorrichtung 6 auf einer ersten Seite 13 mittels eines Scharniers 14 am Heckdeckel 5 angelenkt, wogegen die Schwenkarmvorrichtung 12 auf einer zweiten Seite 15 sich auf der Betätigungseinrichtung 11 abstützt. Die Betätigungseinrichtung 11 umfasst ein Betätigungsgestänge 16, auf der ein Stützabschnitt 17 der Schwenkarmvorrichtung 12 aufliegt, und zwar trennbar. An der Schwenkarmvorrichtung 12 greift ein Federelement 18 an, das besagte Schwenkarmvorrichtung 12 gegen das Betätigungsgestänge 16 und zu spannen bzw. die Luftleitvorrichtung in ihre Ruhestellung Rs zu bewegen sucht. Das Federelement 18 ist eine Schenkelfeder 19, die im Bereich der Scharniers 14 angeordnet ist und sich mit einem ersten Federarm 20 an einem Heckdeckelabschnitt 21 und mit einem zweiten Federarm 20' an der Schwenkarmvorrichtung 12 abstützt.

Das Betätigungsgestänge 16 ist Bestandteil einer Stelleinrichtung 22, die hydraulischer, pneumatischer oder elektrischer Gattung sein kann. Im Ausführungsbeispiel ist das Betätigungsgestänge 16 eine Kolbenstange eine Zylinderkolbeneinheit 23, die aufrecht stehend im Sportwagen 1 angeordnet ist und unter Vermittlung einer Konsole 24 am Aufbau 2 in Lage gehalten. Zum Bewegen der Luftleitvorrichtung 6 aus der Ruhestellung Rs in die Betriebsstellung Bs und umgekehrt führt das Betätigungsgestänge 16 Hubbewegungen in Richtung B-B aus. Die Schwenkarmvorrichtung 12 der Luftleitvorrichtung 6 umfasst zwei Schwenkarme 25,26, die beiderseits einer Mittellängsebene C-C des Sportwagens 1 verlaufen und außerhalb von Längswänden 27,28 des Heckdeckels 5 angeordnet sind. Jeder Schwenkarm bspw. 25 weist an einem freien Ende 29 einen Tragabschnitt 30 für ein Leitelement 31 der Luftleitvorrichtung 6 auf, das mit Abstand zu Heckdeckel 5 verläuft.

Damit in der Ruhestellung Rs der Luftleitvorrichtung 6 Relativbewegungen zwischen ihr und dem Heckdeckel 5 vermieden werden ist eine Sperreinrichtung 31 vorgesehen, die zwischen einem ersten Wandabschnitt 32 des Heckdeckels 5 und einem zweiten Wandabschnitt 33 des Tragabschnitts 30 wirksam ist. Die Sperreinrichtung 31 weist eine Sperrklinke 34 auf, die in der Ruhestellung Rs der Luftleitvorrichtung 6 beide Wandabschnitte 32 und 34 fixiert. Dazu ist die Sperrklinke 34 am Tragabschnitt 30 des Schwenkarms 25 mittels einer Schwenkachse 35 gelagert, wobei eine Feder 36 die Sperrklinke 34 in eine Sperrstellung Sst zu drehen sucht; in der Sperrstellung Sst untergreift die Sperrklinke 32 die Wandabschnitte 32,33. Außerdem liegt die Sperrklinke 32 mit einer Anlagefläche 37 auf einer Stützfläche 38 des Betätigungsgestänges 16 auf, und die Schwenkachse 35 der Sperrklinke 32 liegt außerhalb der Mittelängsebene D-D, so dass durch die Hubbewegung des Betätigungsgestänges 16 die Sperrklinke aus der Sperrstellung Sst in eine Entriegelungsstellung Est bewegt wird.

## Patentansprüche

1. Luftleitvorrichtung für ein Kraftfahrzeug, insbesondere einen Sportwagen, die in Fahrzeugquerrichtung benachbart eines Heckdeckels verläuft und mittels einer Betätigungseinrichtung aus einer Ruhestellung in eine Betriebsstellung und vice versa beweglich ist, **dadurch gekennzeichnet, dass** die Luftleitvorrichtung (6) mittels einer Schwenkarmvorrichtung (12) am Heckdeckel (5) angelenkt ist, die mit der Betätigungseinrichtung (11), mit der die Luftleitvorrichtung (6) aus der Ruhestellung (Rs) in die Betriebsstellung (Bs) bewegt wird, trennbar verbunden ist.

2. Luftleitvorrichtung nach Anspruch 1, **dadurch gekennzeichnet, dass** die Schwenkarmvorrichtung (12) auf einer ersten Seite (13) mittels eines Scharniers (14) am Heckdeckel (5) angelenkt ist und auf einer zweiten Seite (15) sich auf der Betätigungseinrichtung (11) abstützt.

3. Luftleitvorrichtung nach den Ansprüchen 1 und 2, **dadurch gekennzeichnet, dass** die Betätigungseinrichtung (11) eine Betätigungsgestänge (16) umfasst, auf der ein Stützabschnitt (17) der Schwenkarmvorrichtung (12) trennbar aufliegt.

4. Luftleitvorrichtung nach Ansprüche 3, **dadurch gekennzeichnet, dass** an der Schwenkarmvorrichtung (12) ein Federelement (18) wirksam ist, das die Schwenkarmvorrichtung (12) gegen die Betätigungsgestänge (16) zu spannen sucht.

5. Luftleitvorrichtung nach den Ansprüchen 2 und 3, dass das Federelement (18) eine Schenkelfeder (19) ist, die im Bereich des Scharniers (14) angeordnet ist und sich mit einem ersten Federarm (20) an einem Heckdeckelabschnitt (21) und mit einem zweiten Federarm (20) an der Schwenkarmvorrichtung (12) abstützt.

6. Luftleitvorrichtung nach Anspruch 3, **dadurch gekennzeichnet, dass** das Betätigungsgestänge (16) mit einer Stelleinrichtung (22) hydraulischer, pneumatischer, elektrischer oder dergl. Gattung zusammenarbeitet.

7. Luftleitvorrichtung nach Anspruch 6, **dadurch gekennzeichnet, dass** das Betätigungsgestänge (16) der Stelleinrichtung (22) eine Kolbenstange einer Zylinderkolbeneinheit (23) ist.

8. Luftleitvorrichtung nach Anspruch 7, **dadurch gekennzeichnet, dass** Zylinderkolbeneinheit (23) aufrecht stehend angeordnet ist und mittels einer Konsole (24) am Aufbau (2) in Lage gehalten wird.

9. Luftleitvorrichtung nach Anspruch 1, **dadurch gekennzeichnet, dass** die Schwenkarmvorrichtung (12) der Luftleitvorrichtung (6) mehrere Schwenkarme (25,26) umfasst, die bspw. beiderseits einer Mittellängsebene (C-C) des Sportwagens (1) angeordnet sind.

10. Luftleitvorrichtung nach den Ansprüchen 1 und 9, **dadurch gekennzeichnet, dass** die Schwenkarme (25,26) an ihren freien Enden (29) Tragabschnitte (30) für ein Leitelement (31) der Luftleitvorrichtung (6) aufweisen, das nach Art eines Flügels ausgebildet ist und oberhalb des Heckdeckels (5) verläuft.

11. Luftleitvorrichtung nach Anspruch 10, **dadurch gekennzeichnet, dass** zwischen dem Heckdeckel (5) und wenigstens einem Tragabschnitt (30) der Schwenkarme (25,26) eine die Luftleitvorrichtung (6) in ihrer Ruhestellung (Rs) haltende Sperreinrichtung (31) vorgesehen ist.

12. Luftleitvorrichtung nach den Ansprüchen 3 und 11, **dadurch gekennzeichnet, dass** die Sperreinrichtung (31) eine mittels einer Feder (36) belastete Sperrklinke (34) umfasst, die über das Betätigungsgestänge (16) aus einer Sperrstellung (Sst) in eine Entriegelungsstellung (Est) bewegbar ist.

13. Luftleitvorrichtung nach den Ansprüchen 11 und 12, **dadurch gekennzeichnet, dass** die Sperrklinke (34) am Tragabschnitt (30) schwenkbar angeordnet ist.
